# EUROPÄISCHE PATENTANMELDUNG

(11) **EP 2 071 119 A2**
(43) Veröffentlichungstag der Anmeldung: **17.06.2009**
(21) Anmeldenummer: 08171047.7
(22) Anmeldetag: 09.12.2008
(51) Int. Cl.: E06B 9/88, E06B 9/58

(54) **Überwachungsvorrichtung für ein angetriebenes Tor un damit ausgestattetes Tor**

(30) Priorität: 14.12.2007 DE 102007060343
(71) Anmelder: HÖRMANN KG DISSEN, 49201 Dissen (DE)
(72) Erfinder: Hörmann, Stephan, 33334, Gütersloh (DE)
(74) Vertreter: Kastel, Stefan

(57) **Zusammenfassung**

Die Erfindung betrifft eine Überwachungsvorrichtung (36) zur Überwachung der Bewegung eines Flügels (14) eines angetriebenen Tores (10) mit einer Positionserfassungseinrichtung zum Erfassen einer Position des Flügels (14). Um die Zuverlässigkeit der Überwachung der Bewegung des Flügels zu verbessern wird vorgeschlagen, dass die Positionserfassungseinrichtung eine Distanzmesseinrichtung (38) zum unmittelbaren quantitativen Messen einer Distanz eines Flügelbereichs von einem ortsfesten Bereich unter Verwendung einer Wellenaussendung aufweist.

## Beschreibung

Die Erfindung betrifft eine Überwachungsvorrichtung zur Überwachung der Bewegung eines Flügels eines angetriebenen Tores mit einer Positionserfassungseinrichtung zum Erfassen einer Position des Flügels sowie ein mit einer solchen Überwachungsvorrichtung versehenes Tor.

Derartige Überwachungsvorrichtungen sind aus dem Stand der Technik vielfältig bekannt und werden für eine Vielzahl von Zwecken eingesetzt. So ist es bei angetriebenen Toren üblich, Schalter vorzusehen, die von dem Tor bei Erreichen bestimmter Positionen, beispielsweise einer Endlage, betätigt werden. Für jede weitere zu bestimmende Position des Tores ist es bevorzugt, einen weiteren Schalter vorzusehen. Die Schalter sind meistens fest, beispielsweise an einer Führung des Tores, angebracht.

Ein weiterer Ansatz zur Überwachung der Bewegung eines Torflügels ist im Stand der Technik die Verwendung von mechanischem Hindernissensoren. Dabei wird in die beim Schließvorgang voraneilende Kante des Flügels die auch Schließkante genannt wird, ein Kontaktflächenpaar angeordnet, das sich über die gesamte Lände der Kante erstreckt. Die Schließkante ist aus einem elastomeren Material gebildet. Trifft die Schließkante bei Bewegung des Tores auf ein Hindernis, so werden die beiden Kontakte zusammengedrückt und somit eine elektrisch leitende Verbindung hergestellt. Dadurch kann eine Überwachung auf Hindernisse in vielen Fällen realisiert werden.

In Verbindung mit den bereits erwähnten Endlagenschaltern kann unterschieden werden, ob es sich bei dem Hindernis um eine an der Endlage des Tores vorhandene Begrenzung, bei Rolltoren beispielsweise den Boden, handelt oder um ein unbekanntes Hindernis in dem Bewegungsweg des Tores.

Ist das Hindernis unbekannt, so kann eine Steuereinrichtung von der Überwachungseinrichtung darüber informiert werden und den Torantrieb stoppen oder reversieren. Dadurch werden Beschädigungen an dem Hindernis und an dem Tor vermieden.

Eine weitere Entwicklung der Schließkante stellt die Schließkante mit Lichtschranke dar. Das Ansprechen der Kontakte der mechanischen Schließkante beruht insbesondere darauf, dass das Tor eine zur Verformung ausreichende Kraft auf die Schließkante ausübt. Wiederum bei Rolltoren trat jedoch die Situation auf, dass ein sehr hohes Hindernis den Bewegungsweg des Flügels an einer Position behinderte, an der das Gewicht des bereit abgerollten Teils des Flügels nicht ausreichte, um die Kontakte der Schließkante zusammenzudrücken. Somit wurde das Hindernis nicht detektiert. Dies kann bei Verwendung einer Lichtschranke in der Schließkante nicht mehr auftreten.

Den Überwachungsvorrichtungen ist gemein, dass sie die Position des Tores nur an einer begrenzten Zahl von Positionen angeben können, nämlich an den Auslösepositionen der verwendeten Schalter. Genauere Informationen über den Ort der Schließkante sind jedoch beispielsweise im Hinblick auf einen sanften Abbremsvorgang am Ende des Bewegungswegs des Flügels, interessant. Zum Erhalt dieser Information sind im Stand der Technik im Wesentlichen zwei Möglichkeiten bekannt. Einerseits werden bereits Umdrehungszähler an Achsen von Antriebsmotoren angebracht, wobei die Position des Flügels anhand der gemessenen Anzahl Rotationen des Antriebs bestimmt wird.

Andererseits wird, insbesondere bei Toren, die mehrere miteinander gelenkig miteinander verbundene Flügel aufweisen, die Zahl der an einem Sensor vorbeilaufenden Flügelteile oder von zu diesem Zweck angebrachten Markierungen gemessen.

Die Erfindung geht auf die **Aufgabe** zurück, die Zuverlässigkeit der Überwachung der Bewegung des Flügels zu verbessern.

Zur Lösung dieser Aufgabe wird bei einer Überwachungsvorrichtung der eingangs genannten Art vorgeschlagen, dass die Positionserfassungseinrichtung eine Distanzmesseinrichtung zum unmittelbaren quantitativen Messen einer Distanz eines Flügelbereichs von einem ortsfesten Bereich unter Verwendung einer Wellenaussendung aufweist. Des Weiteren wird zur Lösung der Aufgabe ein automatisch angetriebenes Tor mit einer solchen Überwachungsvorrichtung vorgeschlagen.

Die erfindungsgemäße Überwachungsvorrichtung erlaubt die Erfassung der Position des Flügels als Absolutwert. Durch die Entbehrlichkeit von Zähleinrichtungen und weiteren Sensoren vereinfacht sich der Aufbau der Überwachungsvorrichtung, die durch die reduzierte Anzahl von Bauelementen an Zuverlässigkeit gewinnt.

Vorteilhafte Ausgestaltungen der Erfindung sind Gegenstand der Unteransprüche.

Die Distanzmesseinrichtung kann eine LIDAR-Einheit zum Messen der Distanz mittels LIDAR aufweisen. LIDAR-Einheiten sind zuverlässig als Absolutwertgeber einsetzbar und können Distanzen zwischen 1 cm und 100m mit einer Genauigkeit von weniger als 1 mm messen.

Die Distanzmesseinrichtung kann eine Triangulationseinheit zum Messen der Distanz mittels Triangulation aufweisen.

Eine bewegliche Erfassungseinheit kann zur Mitbewegung mit dem Flügel zwecks Erfassung sicherheitskritischer Zustände ausgebildet sein. Eine solche Erfassungseinheit macht beispielsweise Hindernisse im Bewegungsbereich des Flügels erfassbar. Vorteilhaft ist die bewegliche Erfassungseinheit zur drahtlosen Signalübertragung ausgebildet. Eine drahtlose Signalübertragung reduziert die Anzahl der zu verwendenden und zu verlegenden Kabel und erhöht somit die Zuverlässigkeit der Überwachungsvorrichtung.

Die bewegliche Erfassungseinheit kann zur Anordnung an oder nahe einer Schließkante des Flügels ausgebildet sein.

Vorteilhaft ist die bewegliche Erfassungseinheit zur Hinderniserfassung an der Schließkante ausgebildet. Diese Anordnung gewährleistet, dass die bewegliche Erfassungseinheit Hindernisse im sicherheitskritischsten Bereich des Tores erkennen kann.

Im Bereich einer durch den Flügel zu verschließenden Öffnung kann eine ortsfeste Einheit zur ortsfesten Anbringung vorgesehen sein.

Die ortsfeste Einheit kann zur Signalkommunikation mit der beweglichen Erfassungseinheit ausgebildet sein. Dadurch ist es möglich, dass die beweglicher Erfassungseinheit ihre Sensordaten auf einfache Art und Weise an die ortsfeste Einheit weitergibt.

Die Distanzmesseinrichtung kann zur Messung der Distanz zwischen der ortsfesten Einheit und der beweglichen Erfassungseinheit ausgebildet sein. Dies bietet eine besonders günstige Möglichkeit, den Montageaufwand gering zu halten.

In einer weiteren Fortbildung kann die Überwachungseinrichtung einen Sensor zur Erfassung der Drehbewegung eines Motors aufweisen. Somit ist es möglich, die Drehbewegung des Motors mit der Bewegung des Torflügels zu korrelieren.

Das erfindungsgemäße Tor weist eine erfindungsgemäße Überwachungsvorrichtung auf. Dies verbessert die Betriebssicherheit und Zuverlässigkeit des Tores.

Vorteilhafte Ausgestaltungen des Tores sind Gegenstand der weiteren Unteransprüche.

Die Distanzmesseinrichtung kann zur Messung der Distanz eines eine Schließkante aufweisenden Teils des Flügels von einem ortsfesten Referenzpunkt ausgebildet sein. Dadurch ist eine präzise unmittelbare Messung der Position des Flügels möglich.

Wenngleich die Erfindung auf alle möglichen Torarten anwendbar ist (Sektionaltor, Schwingtor, Falttor, Drehtor usw.) ist das Tor vorzugsweise als Rolltor ausgebildet.

Der Flügel kann demnach ein Rolltorpanzer sein. Rolltorpanzer haben den Vorteil, dass sie bei geöffnetem Tor platzsparend sind. Der um das Tor freizuhaltende Raum wird somit reduziert. Weiter werden solche Rollpanzer auf einem Großteil ihres Schließweges geradlinig geführt, was die Konstruktion eines Entfernungsmesssystems vereinfacht.

Der Rolltorpanzer kann ein Schließkantenprofil aufweisen. Vorteilhaft kann das Schließkantenprofil einen Vorsprung aufweisen, der den Flügelbereich bildet. Ein solcher Vorsprung ergibt eine deutlich sichtbare Fläche mit ausreichender Größe zur Vermessung mittels der Distanzmesseinrichtung.

Insbesondere ist der Flügelbereich, dessen Position unmittelbar mit der Distanzmesseinrichtung gemessen wird, im Bereich der Schließkante, beispielsweise an dem Schließkantenprofil angeordnet, um so unmittelbar die Ist-Position der Schließkante - vorzugsweise zu jeder Zeit - direkt zu erfassen. Eine solche Messung wird nicht durch Spiele oder sonstige Unwägbarkeiten zwischen Motor und Schließkante beeinflusst.

Eine Führung des Tores kann vorteilhaft eine Lichtstrecke aufweisen. Eine solche Lichtstrecke gewährleistet einen störungsfreien Betrieb von optischen Datenübertragungs- und Messeinrichtungen. Insbesondere bei seitlichen Rolltorführungen kann die Lichtschranke und/oder Entfernungsmessung innerhalb des durch die Führung umschlossenen Raumes geschützt angeordnet sein.

Die Lichtstrecke kann für eine optische Datenübertragung verwendbar sein.

Weiterhin kann die Lichtstrecke eine Distanzmessstrecke aufweisen.

In einer vorteilhaften Ausgestaltung weist das Tor eine Steuerungseinrichtung zur Steuerung des Tores auf, die anhand der von der Distanzmesseinrichtung ermittelten Position des Flügels die Bewegung des Flügels steuert. Dies erlaubt eine präzise Steuerung der Verfahrgeschwindigkeit des Flügels, insbesondere in Hindernissituationen und im Endbereich des Verfahrbereichs des Flügels. Auch bei Erstinbetriebnahme oder Wiederinbetriebnahme kann die Distanzmesseinrichtung sofort die derzeitige Position erfassen und muss nicht, wie z.B. ein Inkrementalgeber, zunächst anhand eines Referenzpunktes eingestellt werden.

Die Endlagen des Tores können anhand der ermittelten Position des Flügels erfassbar sein, beispielsweise um so eine Steuerung derart zu ermöglichen, dass die Steuereinrichtung bei Erreichen einer Endlage den Motor abschaltet.

Vorteilhaft ist die Steuerungseinrichtung zwecks Motorabschaltung und/oder Reversierung zum Vergleich der Drehbewegung des Motors mit einer von der Distanzmesseinrichtung erfassten Distanzänderung ausgebildet. Dadurch kann eine Blockierung des Flügels auch erkannt werden, wenn die mechanische Hinderniserkennung der Schließkante nicht auslöst. Wenn beispielsweise die Schließkante sich langsamer bewegt, als anhand der Motordrehung zu erwarten wäre, oder gar bei drehendem Motor still steht, kann irgendetwas nicht stimmen. Beispielsweise läuft ein Teil des Rolltorpanzer nicht korrekt in den Führungen, sondern wird dazwischen abgewickelt. Solche Fälle sind durch den Vergleich der unmittelbar gemessenen Position und der Drehbewegung erfassbar; und die Steuerung kann durch Abschalten oder Reversieren des Motors reagieren.

Vorteilhaft weist das bewegliche Element reflektive Elemente auf. Solche reflektiven Elemente verbessern die Nutzbarkeit von LIDAR-Systemen beträchtlich. Insbesondere kann somit die Messstrecke durch mehrfache Umlenkung verlängert und multipliziert werden.

Einzelheiten und weitere Vorteile der erfindungsgemäßen Überwachungsvorrichtung und des erfindungsgemäßen Tores ergeben sich aus der nachfolgenden Beschreibung eines bevorzugten Ausführungsbeispiels. In den das Ausführungsbeispiel lediglich schematisch darstellenden Zeichnungen veranschaulichen im Einzelnen:
- Figur 1: eine Frontansicht auf ein Rolltor mit einer Überwachungsvorrichtung gemäß einer Ausführungsform der vorliegenden Erfindung;

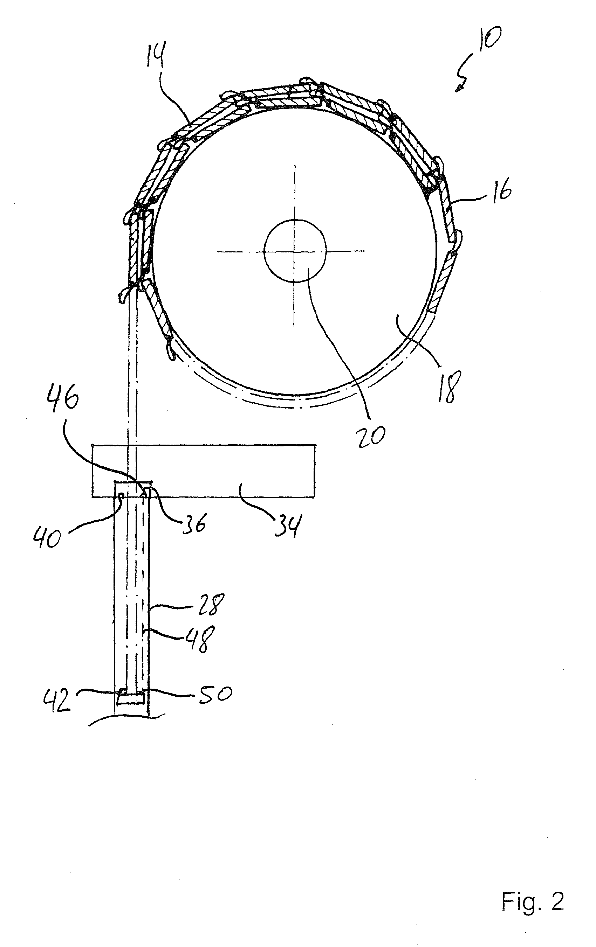

- Figur 2: eine Schnittansicht entlang der Linie II-II in Figur 1 und
- Figur 3: eine Querschnittsansicht entlang der Linie III-III aus Figur 1.

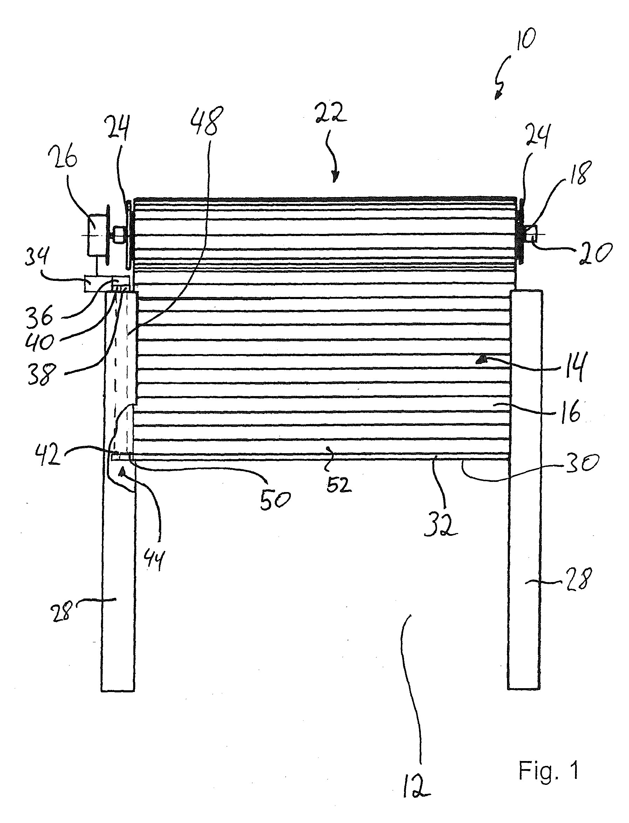

Das in Figur 1 gezeigte Tor in Form eines Rolltores 10 ist zum Verschließen einer Gebäudeöffnung 12 ausgebildet. Als bewegbarer Flügel des Tores ist dazu ein Rolltorpanzer 14 vorgesehen, der miteinander an Langseiten verbundene Lamellen 16 aufweist. Der Rolltorpanzer 14 kann auf einer Wickelwelle 18 aufgerollt werden. Die Wickelwelle 18 umfasst eine Achse 20, an der ein Wickelbereich 22 durch seitliche Führungsscheiben 24 festgelegt ist.

Zur Drehung der Wickelwelle 18 ist eine Antriebsvorrichtung 26 vorgesehen. Die Antriebsvorrichtung 26 weist einen reversiblen Elektromotor auf, der je nach Drehrichtung den Rolltorpanzer 14 von der Wickelwelle 18 abrollt und damit die Gebäudeöffnung 12 schließt oder den Rolltorpanzer 14 auf die Wickelwelle 18 aufrollt und damit die Gebäudeöffnung 12 öffnet.

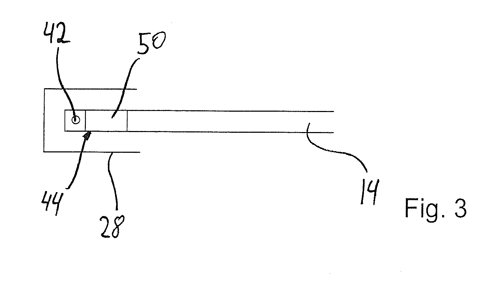

Entlang des gewünschten Verfahrweges des Rolltorpanzers 14 sind seitliche Führungen 28 angeordnet, welche die Lamellen 16 des Rolltorpanzers 14 in einem Randbereich umfassen und führen. Dazu sind die Führungen 28 aus einem Metallblech angefertigt, das einen Führungsraum im Wesentlichen U-förmigen umschließt, wie Fig. 3 zeigt.

Eine untere Kante 30 des Rolltorpanzers 14 wirkt als Schließkante 30 und ist mit einer Schließkantensicherung 32, beispielsweise mit einem Schaltelement aus einem elastomeren Material, versehen, die sich über die gesamte Breite des Rolltorpanzers 14 erstreckt. Die Schließkantensicherung 32 weist z.B. elektrische Kontaktelemente auf, die in einem Grundzustand voneinander beabstandet angeordnet sind. Trifft die Schließkante 30 beim Schließen des Rolltores 10 auf ein Hindernis, so wird das Schaltelement der Schließkantesicherung 32 zusammengedrückt und die elektrischen Kontakte berühren sich. In alternativer oder zusätzlicher Ausgestaltung weist die Schließkantensicherung 32 eine nicht näher dargestellte Lichtschranke zur Hinderniserfassung auf.

Zur Steuerung des Rolltores 10 ist eine ortsfeste Einheit 34, die als Steuerungseinheit ausgebildet ist, vorgesehen. Der Steuerungseinheit 34 ist eine Überwachungsvorrichtung 36 beigeordnet, die zur Überwachung des störungsfreien Betriebes des Rolltores 10 ausgebildet ist.

Die Überwachungsvorrichtung 36 weist dazu eine Distanzmesseinrichtung 38 sowie eine Empfangseinrichtung 40 zum Empfang von Signalen von Sensoreinrichtungen auf.

In diesem Ausführungsbeispiel ist vorgesehen, dass die Empfangseinrichtung 40 Signale von einer Sendeeinrichtung 42 empfängt, die der Schließkantesicherung 32 zugeordnet ist. Die Empfangseinrichtung 40 weist dazu einen Infrarotempfänger und die Sendeeinrichtung 42 einen Infrarotsender auf. Die Sendeeinrichtung 42 ist an einem in die Führung 28 hineinragenden Vorsprung 44 eines die Schließkante 30 aufweisenden Schließkantenprofils 52 (unterste Lamelle) angeordnet und im Wesentlichen auf die Empfangseinrichtung 40 zu ausgerichtet. Die optische Datenübertragung zwischen Sendeeinrichtung 42 und Empfangseinrichtung 40 findet somit in einem abgedunkeltem Bereich der Führung 28 statt, und somit wird der Einfluss von Umgebungslicht auf die Datenübertragung verringert.

Die Überwachungsvorrichtung 36 weist weiterhin eine Distanzmesseinrichtung 46 auf, die mittels eines Laserstrahls 48 kontinuierlich die Entfernung des Vorsprungs 44 von der Überwachungsvorrichtung 36 misst.

Die Distanzmesseinrichtung 46 misst dazu Eigenschaften des von dem Vorsprung 44 reflektierten Lichts des Laserstrahls 48. Um die Genauigkeit dieser Messung zu verbessern, sind auf der der Distanzmesseinrichtung 46 zugewandten Oberfläche des Vorsprungs 44 Reflexionselemente 50 angeordnet. Die Reflexionselemente 50 erhöhen den Reflexionsgrad der Oberfläche des Vorsprungs 44 und tragen so zu einer genaueren Distanzmessung durch die Distanzmesseinrichtung 46 bei. In einer anderen Ausgestaltung wird der Laserstrahl über Reflexionselemente mehrfach auch durch die Strecke zwischen Vorsprung 44 und Distanzmesseinrichtung 46 geleitet, um so die Messgenauigkeit zu erhöhen.

Die Wellenlängen des Lichts für den Laserstrahl 48 und für die Sendeeinrichtung 42 sind so abgestimmt, dass sie sich gegenseitig nicht stören.

Die Schließkantensicherung 32 weist weiterhin eine Ansteuerungselektronik zur Auswertung des Zustands der Schließkante 30 sowie zur Ansteuerung der Sendeeinrichtung 42 auf.

Die Überwachungsvorrichtung 36 überwacht im Betrieb die ordnungsgemäße Funktion des Rolltores. Im Falle einer Fehlfunktion gibt sie ein Signal an die Steuerungseinheit 34 ab. Aufgrund der in diesem Ausführungsbeispiel verwendeten Sensoren, nämlich diejenigen der Schließkantensicherung 32 und der Distanzmesseinrichtung 46, kann die Überwachungsvorrichtung 36 Fehlfunktionen auf unterschiedliche Art und Weise feststellen.

Das Auslösen der Schließkantensicherung 32, also ein Auftreten eines Kontakts zwischen den in dem Schaltelement der Schließkantensicherung 32 enthaltenen Kontaktelementen, kann sowohl bei einem vollständigen Schließen des Rolltores 10 durch den Druck des Rolltorpanzers 14 auf die Schließkante 30 einerseits und dem Gegendruck des Bodens, an dem die Schließkante 30 anliegt, andererseits ausgelöst werden. In diesem Fall ist die Antriebsvorrichtung 26 anzuhalten, da das Tor vollständig geschlossen ist.

Löst die Schließkante 32 aus, wenn der Rolltorpanzer 14 nicht an dem Boden anliegt, so befindet sich ein Hindernis in dem Bewegungsbereich der Schließkante 32 und somit des Rolltorpanzers 14. In diesem Fall muss ebenfalls die Antriebsvorrichtung 26 angehalten werden. Vorteilhaft kann die Steuerungseinheit 34 die Antriebsvorrichtung 26 reversieren und somit den Druck auf das Hindernis verringern.

Die Unterscheidung, ob die Schließkante 32 wegen Bodenkontakt oder wegen eines Hindernisses auslöst, wird von der Steuerungseinheit anhand der Informationen der Distanzmesseinrichtung 38 getroffen. Aufgrund der zwischen Überwachungsvorrichtung 36 und Vorsprung 44 gemessenen Distanz wird die Position des Rolltorpanzers 14 bzw. der Schließkante 32 ermittelt. Da diese Positionsbestimmung äußerst genau durchführbar ist, kann durch eine Kombination der Informationen von der Schließkante 32 und der Distanzmesseinrichtung 38 ein rechtzeitiges Abschalten der Antriebsvorrichtung 26 bei Erreichen der Schließstellung des Rolltorpanzers 14 eingeleitet werden. Die Unterscheidung zwischen der Endstellung des Rolltorpanzers 14 und einer Notsituation wird somit vereinfacht.

Außerdem lässt sich eine sehr genaue Endlagensteuerung - Abschalten beim Erreichen der Endlagen - auch mit sanfter Anlauffunktion und schnellem Lauf dazwischen allein augrund der Signale und Auswertung der Distanzmesseinrichtung erzielen.

Für den Fall, dass die Schließkante 32 einen Defekt aufweist oder aufgrund von zu geringem Druck nicht auslöst, ermittelt die Überwachungsvorrichtung 36 aus der Veränderung der von der Distanzmesseinrichtung 38 gemessenen Distanz die Verfahrgeschwindigkeit des Rolltorpanzers 14. Anschließend vergleicht die Überwachungsvorrichtung 36 die Verfahrgeschwindigkeit des Rolltorpanzers 14 mit der von der Steuerungseinheit 34 gemessenen Drehgeschwindigkeit der Antriebsvorrichtung 26. Verändert sich die Distanz des Vorsprungs 44 von der Überwachungsvorrichtung 36 nicht, obwohl die Antriebsvorrichtung 26 in Betrieb ist, so ist anzunehmen, dass der Rolltorpanzer 14 blockiert wird. Möglicherweise handelt es sich dabei um eine Hindernis, welches von der Schließkante 32 nicht erkannt wird. In diesem Fall löst die Überwachungsvorrichtung 26 durch ein entsprechendes Signal an die Steuerungseinheit 34 eine Abschaltung der Antriebsvorrichtung 26 und gegebenenfalls deren Reversierung aus.

Da die Distanzmesseinrichtung 38 zur Absolutmessung von Entfernungen ausgebildet ist, ist keine Bestimmung von Referenzpositionen, beispielsweise durch Endlagenschalter, notwendig. Die Zahl zu montierender Elemente wird somit reduziert und der Aufbau insgesamt vereinfacht. Dadurch werden Montagefehler von vornherein vermieden.

Es kann vorgesehen sein, dass in der Schließkante 32 eine Selbstdiagnoseeinheit vorgesehen ist, welche die korrekte Funktion der Schießkante 32 überprüft. Mittels der Sendeeinrichtung 42 kann bei einer Fehlfunktion die Bewegung des Rolltorpanzers 14 gestoppt werden.

Die erfindungsgemäße Überwachungsvorrichtung 36 und das erfindungsgemäße Rolltor 10 bieten einen einfachen Aufbau mit geringer Fehlerwahrscheinlichkeit sowie eine zuverlässige Erkennung von Fehlersituationen.

Gezeigte Distanzmesseinrichtungen 38 sind auf dem Markt zu anderen Zwecken - nämlich zur genauen Entfernungsmessung anstelle von Metermaßen oder dergleichen - bereits zu vernünftigen Preisen erhältlich. Beispielsweise bietet die Fa. Leica Geosystems entsprechende Laserdistanzmessgeräte, deren Messwerte elektronisch weiterverarbeitbar sind, unter der Marke "Leica DISTO ^{™}" an. Der Messbereich reicht von 0,05 bis 60 m mit einer Genauigkeit von ⁺ 1,5mm, was für die beschriebenen Zwecke völlig ausreichend ist. Auch Geräte mit Blue tooth-Schnittstelle zwecks Datenübertragung sind erhältlich.

Entsprechende Geräte können - eventuell in adaptierten Gehäusen - leicht an einem automatisch zu überwachenden Tor verwendet werden.

### Bezugszeichenliste

- 10: Rolltor
- 12: Gebäudeöffnung
- 14: Rolltorpanzer (Flügel)
- 16: Lamelle
- 18: Wickelwelle
- 20: Achse
- 22: Wickelbereich
- 24: Führungsscheibe
- 26: Antriebvorrichtung
- 28: Führung
- 30: SchließKante
- 32: Schließkantensicherung (bewegliche Erfassungseinheit)
- 34: Steuerungseinheit (ortsfeste Einheit)
- 36: Überwachungseinrichtung
- 38: Distanzmesseinrichtung
- 40: Empfangseinrichtung
- 42: Sendeeinrichtung
- 44: Vorsprung
- 46: Distanzmesseinrichtung
- 48: Laserstrahl
- 50: Reflexionselement
- 52: Schließkantenprofil

## Patentansprüche

1. Überwachungsvorrichtung (36) zur Überwachung der Bewegung eines Flügels (14) eines angetriebenen Tores (10) mit einer Positionserfassungseinrichtung zum Erfassen einer Position des Flügels (14), **dadurch gekennzeichnet, dass** die Positionserfassungseinrichtung eine Distanzmesseinrichtung (38) zum unmittelbaren quantitativen Messen einer Distanz eines Flügelbereichs von einem ortsfesten Bereich unter Verwendung einer Wellenaussendung aufweist.

2. Überwachungsvorrichtung nach Anspruch 1, **dadurch gekennzeichnet, dass** die Distanzmesseinrichtung (38) eine LIDAR-Einheit zum Messen der Distanz mittels LIDAR aufweist.

3. Überwachungsvorrichtung nach einem der voranstehenden Ansprüche, **dadurch gekennzeichnet, dass** die Distanzmesseinrichtung (38) eine Triangulationseinheit zum Messen der Distanz mittels Triangulation aufweist.

4. Überwachungsvorrichtung nach einem der voranstehenden Ansprüche, **dadurch gekennzeichnet, dass** eine bewegliche Erfassungseinheit (32) zur Mitbewegung mit dem Flügel (14) zwecks Erfassung sicherheitskritischer Zustände ausgebildet ist.

5. Überwachungsvorrichtung nach Anspruch 4, **dadurch gekennzeichnet, dass** die bewegliche Erfassungseinheit (32) zur drahtlosen Signalübertragung ausgebildet ist.

6. Überwachungsvorrichtung nach Anspruch 4 oder 5, **dadurch gekennzeichnet, dass** die bewegliche Erfassungseinheit (32) zur Anordnung an oder nahe einer Schließkante (30) des Flügels (14) ausgebildet ist.

7. Überwachungsvorrichtung nach einem der Ansprüche 4 bis 6, **dadurch gekennzeichnet, dass** die bewegliche Erfassungseinheit (32) zur Hinderniserfassung an der Schließkante (30) ausgebildet ist.

8. Überwachungsvorrichtung nach einem der voranstehenden Ansprüche, **dadurch gekennzeichnet, dass** eine ortsfeste Einheit (34) zur ortsfesten Anbringung im Bereich einer durch den Flügel (14) zu verschließenden Öffnung (12) vorgesehen ist.

9. Überwachungsvorrichtung nach Anspruch 8, **dadurch gekennzeichnet, dass** die ortsfeste Einheit (34) zur Signalkommunikation mit der beweglichen Erfassungseinheit (32) ausgebildet ist.

10. Überwachungsvorrichtung nach Anspruch 8 oder 9, **dadurch gekennzeichnet, dass** die Distanzmesseinrichtung (38) zur Messung der Distanz zwischen der ortsfesten Einheit (34) und der beweglichen Erfassungseinheit (32) ausgebildet ist.

11. Überwachungsvorrichtung nach einem der voranstehenden Ansprüche, **dadurch gekennzeichnet, dass** die Distanzmesseinrichtung (38) der ortsfesten Einheit (34) oder der beweglichen Erfassungseinheit (32) zugeordnet ist.

12. Überwachungsvorrichtung nach einem der voranstehenden Ansprüche, **dadurch gekennzeichnet, dass** die Überwachungsvorrichtung (36) einen Sensor zur Erfassung der Drehbewegung eines Antriebs (26), insbesondere eines elektrischen Motors, aufweist.

13. Automatisch angetriebenes Tor (10) mit einem Flügel (14) und einem Antrieb (26), **gekennzeichnet durch** eine Überwachungsvorrichtung (36) nach einem der voranstehenden Ansprüche.

14. Tor nach Anspruch 13, **dadurch gekennzeichnet, dass** die Distanzmesseinrichtung (38) zur Messung der Distanz eines eine Schließkante (30) aufweisenden Teils des Flügels (14) von einem ortsfesten Referenzpunkt ausgebildet ist.

15. Tor nach Anspruch 13 oder 14, **dadurch gekennzeichnet, dass** der Flügel ein Rolltorpanzer (14) ist.

16. Tor nach Anspruch 15, **dadurch gekennzeichnet, dass** der Rolltorpanzer (14) ein Schließkantenprofil aufweist.

17. Tor nach Anspruch 16, **dadurch gekennzeichnet, dass** das Schließkantenprofil einen Vorsprung (44) aufweist, der den Flügelbereich bildet.

18. Tor nach einem der Ansprüche 13 bis 17, **dadurch gekennzeichnet, dass** eine Führung (28) des Tores eine Lichtstrecke aufweist.

19. Tor nach Anspruch 18, **dadurch gekennzeichnet, dass** die Lichtstrecke für eine optische Datenübertragung verwendbar ist.

20. Tor nach Anspruch 18 oder 19, **dadurch gekennzeichnet, dass** die Lichtstrecke eine Distanzmessstrecke aufweist.

21. Tor nach einem der Ansprüche 13 bis 20, **gekennzeichnet durch** eine Steuerungseinrichtung (34) zur Steuerung des Tores (10), die anhand der von der Distanzmesseinrichtung (38) ermittelten Position des Flügels (14) die Bewegung des Flügels (14) steuert.

22. Tor nach Anspruch 21, **dadurch gekennzeichnet, dass** die Endlagen des Tores (10) anhand der ermittelten Position des Flügels (14) zwecks Motorabschaltung durch die Steuerungseinrichtung (34) erfassbar sind.

23. Tor nach Anspruch 21 oder 22, **dadurch gekennzeichnet, dass** die Steuerungseinrichtung (34) zwecks Motorabschaltung und/oder Reversierung zum Vergleich der Drehbewegung des Motors mit der Distanzänderung ausgebildet ist.

24. Tor nach einem der Ansprüche 13 bis 23, **dadurch gekennzeichnet, dass** das bewegliche Element Reflexionselemente (50) aufweist.
